# EUROPÄISCHE PATENTSCHRIFT

(11) **EP 1 642 494 B1**
(45) Veröffentlichungstag und Bekanntmachung des Hinweises auf die Patenterteilung: **15.07.2009**
(21) Anmeldenummer: 05016639.6
(22) Anmeldetag: 30.07.2005
(51) Int. Cl.: A01J 25/11, A23C 19/05

(54) **Verfahren und Vorrichtung zur Herstellung eines Frischkäsekonzentrates mit hohem Trockenmassegehalt**
Method and device for producing a concentrate of fresh cheese with a high content of dry solids
Procédé et dispositif pour la production d'un concentré de fromage frais à haute teneur en matière sèche

(30) Priorität: 04.10.2004 DE 102004048588
(43) Veröffentlichungstag der Anmeldung: 05.04.2006
(73) Patentinhaber: GEA Westfalia Separator GmbH, 59302 Oelde (DE)
(72) Erfinder: Uphus, Arnold, 59302 Oelde (DE); Hüllmann, Markus, Dipl.-Ing., 33378 Rheda-Wiedenbrück (DE); Bathen, Christian, Dipl.-Ing., 59302 Oelde (DE); Mathiesen, Claus, Dipl.-Ing., 33378 Rheda-Wiedenbrück (DE)
(74) Vertreter: Specht, Peter

(56) Entgegenhaltungen:
- EP-A- 0 089 777
- EP-A- 0 411 261
- DE-A1- 19 704 673
- DE-A1- 19 906 379
- DE-B- 1 063 442
- DE-B- 1 238 755
- DE-U1- 20 010 743
- US-A- 4 713 254

## Beschreibung

Die Erfindung betrifft ein Verfahren nach dem Merkmal a) des Anspruchs 1 und eine Vorrichtung zur Durchführung des Verfahrens.

Bei der Frischkäseherstellung, so insbesondere auch bei der Speisequarkherstellung, wird in der Regel Milch als Ausgangsprodukt ggf. nach einer Vorbehandlung "dickgelegt" (Säuern und Eiweißgerinnung). Diese koagulierte Milch wird sodann einem Konzentrationsschritt unterzogen, wobei z.B. mittels eines Düsenseparators mit vertikaler Drehachse Molke aus der dickgelegten Milch abgetrennt wird. Das derart gewonnene Konzentrat wird sodann i.d.R. gekühlt und kann verpackt werden.

Nach dem Stand der Technik ist es beispielsweise bekannt, dickgelegte Kesselmilch in einem Düsenseparator bei ca. 40 °C auszuseparieren, wobei Molke und Käsebruch als Feststoffkonzentrat voneinander getrennt werden. Das durch die Düsen austretende Konzentrat - der Käsebruch - wird sodann z.B. mittels einer dem Separator nachgeschalteten Pumpe durch einen Quarkkühler gepumpt, dort gekühlt und dann verpackt.

Aus der EP 0 440 208 B1 ist es bekannt, den Trockenmassegehalt der in eine Trenneinrichtung eingeleiteten eingedickten Milch zu bestimmen und diese Information bei der Herstellung von Doppelrahmfrischkäse zu nutzen.

Ein Verfahren zur Quarkherstellung beschreibt die DE-A-1 133 939. Zum Stand der Technik seien noch die DE-A-1 238 755 und die DE 2 636 882 genannt, die weitere Hintergrundinformationen zum Stand der Technik der Quarkherstellung enthalten.

Ebenfalls zum Stand der Technik genannt seien die DE 199 06 379 A1, die DE 197 04 673 A1, die DE 10 63 442 C, die DE 200 10 7743 U1, die EP 0411 261 A1, die EP 0089 777 A1, die US 47 13 254.

In der Lebensmitteltechnologie besteht zum Beispiel zur Zubereitung von Süßwaren auch ein Bedarf nach einem Frischkäsekonzentrat, insbesondere nach einem Quarkkonzentrat, mit einem besonders hohen Trockenmassegehalt von z.B. 30%, also mit einem höheren Trockenmassegehalt, als er beispielsweise in Düsenseparatoren, mit vertretbarem Aufwand erzielbar ist. Nach dem Stand der Technik wird daher ein derart hoher Trockenmassegehalt durch ein weiteres Pressen des Käsebruchs in Säcken erzeugt. Dieses Verfahren ist unwirtschaftlich und auch unter Hygienegesichtspunkten nicht optimal.

Vor diesem Hintergrund ist es die Aufgabe der Erfindung, ein wirtschaftlicheres und hygienisch besser beherrschbares Verfahren zum Herstellen eines Käsebruchs bzw. Frischkäsekonzentrats, insbesondere Quarkkonzentrats, mit einem besonders hohen Trockenmassegehalt sowie eine entsprechend wirtschaftlich und hygienisch betreibbare Vorrichtung zur Durchführung des Verfahrens zu schaffen.

Die Erfindung löst die genannte Aufgabe in Hinsicht auf das Verfahren durch den Gegenstand des Anspruchs 1 und in Hinsicht auf die Vorrichtung durch den Gegenstand des Anspruchs 10.

Die der ersten Trenneinrichtung direkt über wenigstens eine zwischengeschaltete Einrichtung nachgeschaltete Vollmantel-Schneckenzentrifuge ermöglicht es auf einfache und hygienische Weise, den Trockenmassegehalt des aus dem Düsenseparator ausgetretenen Käsebruchs, insbesondere des Speisequarks nochmals deutlich zu erhöhen, so auf einen Trockenmassegehalt von weniger als 35%, insbesondere 30%.

Es ist vorteilhaft, wenn als weiterer Verfahrensschritt nach dem Trennen in der Zentrifuge ein Einleiten und Zwischenlagern des aus der ersten Trenneinrichtung abgeleiteten Käsebruchs in einem Zwischenbehälter erfolgt, da dieser die Beherrschbarkeit insbesondere der folgenden Verfahrensschritte erhöht.

Bevorzugt wird in der ersten Trenneinrichtung zunächst ein Käsebruch mit einem Trockenmassegehalt von vorzugsweise 14 % bis 18 % hergestellt. Sodann erfolgt vorzugsweise nach dem Zwischenlagern ein Erhitzen des Käsebruchs und ein Durchlaufen einer Reaktionsstrecke nach dem Erhitzen. Nach dem Durchlaufen der Reaktionsstrecke vorgegebener Länge, also nach einem Verweilen in derselben über eine vorgegebene Zeitspanne wird der Käsebruch nochmals erhitzt.

Dabei erfolgt die erste Erhitzung vorzugsweise auf eine Temperatur T1 und die zweite Erhitzung auf eine Temperatur T2, die höher als T1 liegt.

Die Temperatur T1 bei der ersten Erhitzung bestimmt sich nach der Art und Weise der Vorbehandlung z.B. in der ersten Trenneinrichtung. So liegt die Temperatur in Abhängigkeit von der Vorbehandlung vorzugsweise zwischen 20 °C und 30 °C oder 40 °C bis 45°C und die Temperatur T2 bei der zweiten Erhitzung vorzugsweise bei 60-80 °C..

Die Zeitspanne der ersten Erhitzung bzw. Erwärmung liegt vorzugsweise nach einer vorteilhaften Ausführungsvariante bei 1 bis 5 min. Nach der zweiten Erwärmung erfolgt die Weiterverarbeitung im Dekanter (Vollmantel-Schneckenzentrifuge), so dass der Käsebruch in diesen im wesentlichen bei der Temperatur T2 eintritt.

Derart ist es auf besonders einfache Weise möglich, die Wasseraufnahme der Proteinzellen im Käsebruch auf einfache und hygienische Weise zu verringern, so dass mit der Vollmantel-Schneckenzentrifuge ohne weiteres eine weitere Abtrennung von Molke aus dem Käsebruch erfolgen kann.

In Hinsicht auf die Vollmantel-Schneckenzentrifuge hat es sich als besonders vorteilhaft herausgestellt, wenn die freiwerdende Molke mittels eines Greifers unter Druck und der weiter aufkonzentrierte Käsebruch als Frischkäsekonzentrat mittels einer Schnecke über einen Feststoffaustrag aus der Vollmantel-Schneckenzentrifugetrommel ausgetragen wird.

Das erfindungsgemäße Verfahren lässt sich unter besten hygienischen Bedingungen realisieren. Die Vorrichtung lässt sich dabei auch an bestehenden Anlagen nachrüsten, indem im wesentlichen die Komponenten Zwischentank, Erhitzungseinrichtungen, Reaktionsstrecke und Dekanter ergänzt werden. Wird als erste Trenneinrichtung ein Düsenseparator eingesetzt, ergibt sich eine besonders vorteilhafte Anlage. Alternativ können die vorstehend genannten Komponenten aber auch an anderen Anlagen zur Frischkäseherstellung ergänzt werden.

Weitere vorteilhafte Ausgestaltungen sind den übrigen Unteransprüchen zu entnehmen.

Nachfolgend wird die Erfindung anhand eines Ausführungsbeispiels unter Bezug auf die Figuren näher beschrieben. Es zeigt:

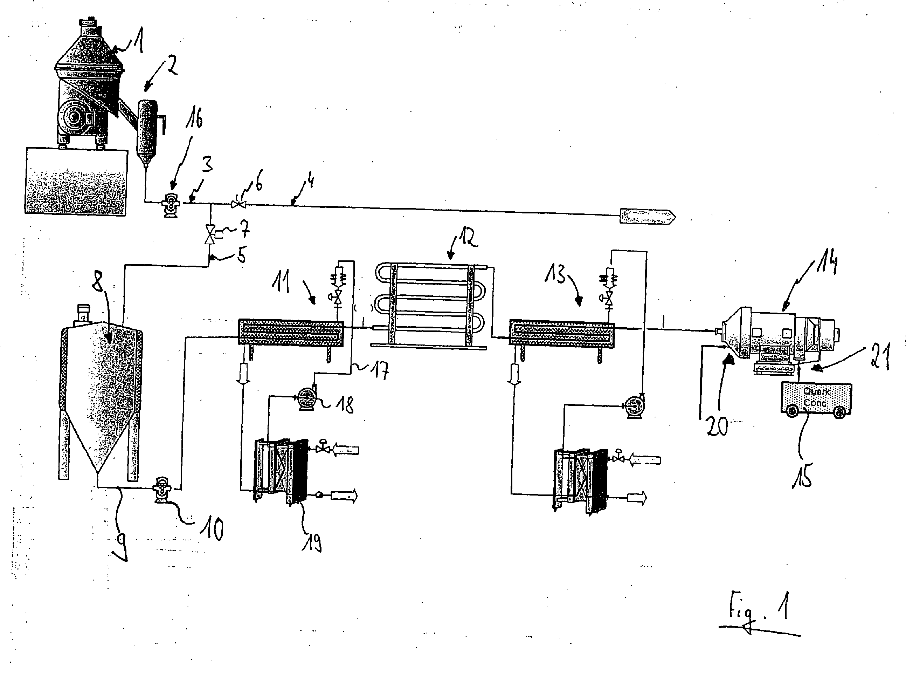

- Figur 1: eine Vorrichtung bzw. Anlage zur Durchführung des erfindungsgemäßen Verfahrens.

Fig. 1 zeigt eine Anlage bzw. Vorrichtung zur Herstellung eines Quarkkonzentrates mit hohem Trockenmassegehalt. Das erfindungsgemäße Verfahren und die Vorrichtung sind jedoch nicht auf das gezeigte Ausführungsbeispiel der Frischkäseherstellung beschränkt sondern eignen sich allgemein zur Herstellung von Frischkäsekonzentraten.

Diese Anlage weist als erste Trenneinrichtung in bevorzugter Ausgestaltung einen Düsenseparator 1 auf, mit dem dickgelegte Milch in eine wässrige Phase und ein Feststoffkonzentrat, den Käsebruch, getrennt wird, der durch einen Quarktrichter 2 und eine diesem nachgeschaltete Leitung 3 hier mit einer Pumpe 16 aus dem Düsenseparator 1 abgeleitet wird, die sich hier beispielhaft in zwei Zweigleitungen 4, 5 gabelt, in welche jeweils ein Ventil 6, 7 geschaltet ist..

Der aus dem Düsenseparator 1 abgeleitete Käsebruch ist bei geeigneter Trockenmassegehalteinstellung im Düsenseparator als Speisequark verwertbar und kann durch die Zweigleitung 4 direkt abgeleitet und weiter verarbeitet werden.

Alternativ dazu besteht die Möglichkeit, den Käsebruch zunächst über die Zweigleitung 5 in einen Zwischenbehälter 8 zu leiten, der eine Ableitung 9 aufweist, in die eine Pumpe 10 - eine Verdrängerpumpe - geschaltet ist.

Mittels der Pumpe 10 kann der Käsebruch aus dem Zwischenbehälter 8 über eine erste Erhitzungsvorrichtung 11, eine dieser nachgeschaltete Reaktionsstrecke 12 und eine dieser nachgeschaltete zweite Erhitzungseinrichtung 13 in eine Vollmantel-Schneckenzentrifuge 14 geleitet werden, in der eine weitere Aufkonzentrierung des Käsebruches erfolgt. Als Pumpe 10 wird vorzugsweise eine Verdrängerpumpe eingesetzt.

Als Erhitzungseinrichtungen 11, 13 bieten sich jeweils Röhrenerhitzer an (den Erhitzungseinrichtungen gehören hier beispielhaft noch die Elemente Wasserkreislauf 17 mit Pumpe 18 und Wärmetauscher 19 an).

Die Schritte des Erhitzens mit der ersten Erhitzungseinrichtung 11 auf eine Temperatur T1, des Durchlaufens der Reaktionsstrecke 12 und des Erhitzens mit der zweiten Erhitzungseinrichtung 13 auf eine Temperatur T2 sind derart aufeinander abgestimmt, dass in der Reaktionsstrecke 12 nach dem Erhitzen eine Reaktion der Proteine erfolgt, die das Wasserbindungsvermögen der Proteinzellen verringert bzw. minimiert.

Durch die Erhitzungsschritte und die zwischengeschaltete Reaktionsstrecke kommt es daher zu einer ausreichenden Stabilisierung der Proteine, welche sich sodann in der nachgeschalteten Vollmantel-Schneckenzentrifuge 14 vorzugsweise bei der Temperatur T2 weiter konzentrieren lassen.

In der Vollmantel-Schneckenzentrifuge 14 erfolgt eine weitere Aufkonzentration in ein proteinreiches und wasserarmes Quarkkonzentrat und Molke, wobei es vorteilhaft ist, die freiwerdende Molke vorzugsweise mittels einer Schälscheibe (hier nicht detailliert zu erkennen) unter Druck aus der Trommel der Vollmantel-Schneckenzentrifuge abzuleiten und das Quarkkonzentrat mittels der Schnecke über einen Feststoffaustrag 21 (hier nicht detailliert zu erkennen) aus der Trommel des Vollmantel-Schneckenzentrifuge 14 in ein Behältnis 15 auszutragen.

Das derart gewonnene Quarkkonzentrat ist fest genug, um es beispielsweise mit Schokolade zu ummanteln und eignet sich damit hervorragend zur Herstellung von Quarkriegeln.

Analog lassen sich außer einem Speisequarkkonzentrat auch andere Frischkäsekonzentrate herstellen.

### Bezugszeichen

- Düsenseparator: 1
- Quarktrichter: 2
- Leitung: 3
- Zweigleitungen: 4, 5
- Ventil: 6, 7
- Zwischenbehälter: 8
- Ableitung: 9
- Pumpe: 10
- Erhitzungsvorrichtung: 11
- Reaktionsstrecke: 12
- Kühlstrecke: 13
- Vollmantel-Schneckenzentrifuge: 14
- Behältnis: 15
- Pumpe: 16
- Wasserkreislauf: 17
- Pumpe: 18
- Wärmetauscher: 19
- Flüssigkeitsaustrag: 20
- Feststoffaustrag: 21

## Patentansprüche

1. Verfahren zur Herstellung eines Frischkäsekonzentrats, insbesondere Quarkkonzentrats, bei dem
a. mittels einer als Düsenseparator (1) oder Siebzentrifuge ausgebildeten ersten Trenneinrichtung dickgelegte Milch in eine wässrige Phase und ein Feststoffkonzentrat, den Käsebruch, abgetrennt wird,
b. der aus der Zentrifuge (1) abgeleitete Käsebruch in eine der ersten Zentrifuge nachgeschaltete Vollmantel-Schneckenzentrifuge (14) geleitet wird, wo weitere Molke vom Käsebruch abgetrennt und der Käsebruch weiter aufkonzentriert wird.

2. Verfahren nach Anspruch 1, **dadurch gekennzeichnet, dass** der Käsebruch in der Vollmantel-Schneckenzentrifuge (14) bis auf einen Trockenmassegehalt von weniger als 35, insbesondere 30% aufkonzentriert wird.

3. Verfahren nach einem der vorstehenden Ansprüche 1 oder 2, **dadurch gekennzeichnet, dass** in der ersten Trenneinrichtung (1) ein Käsebruch mit einem Trockenmassegehalt von 14 % bis 18% hergestellt wird.

4. Verfahren nach Anspruch 1, 2 oder 3, **dadurch gekennzeichnet, dass** als Zwischenschritt zwischen Schritt a) und Schritt b) des Anspruchs 1 ein Einleiten und Zwischenlagern des aus der ersten Trenneinrichtung (1) abgeleiteten Käsebruchs in einem Zwischenbehälter (8) erfolgt.

5. Verfahren nach einem der vorstehenden Ansprüche, **dadurch gekennzeichnet, dass** als Zwischenschritt zwischen Schritt a) und Schritt b) des Anspruchs 1 ein Erhitzen des Käsebruchs auf eine Temperatur T1 erfolgt.

6. Verfahren nach einem der vorstehenden Ansprüche, **dadurch gekennzeichnet, dass** weiterer Zwischenschritt zwischen Schritt a) und Schritt b) des Anspruchs 1 ein Durchlaufen einer Reaktionsstrecke (12) nach dem Erhitzen erfolgt.

7. Verfahren nach einem der vorstehenden Ansprüche, **dadurch gekennzeichnet, dass** als Zwischenschritt zwischen Schritt a) und Schritt b) des Anspruchs 1 ein weiteres Erhitzen des Käsebruchs auf eine zweites Temperatur T2 erfolgt.

8. Verfahren nach einem der vorstehenden Ansprüche, **dadurch gekennzeichnet, dass** die Temperatur T1, auf welche der Käsebruch beim ersten Erhitzen erwärmt wird, kleiner ist als die Temperatur T2, auf welche der Käsebruch beim zweiten Erhitzen erwärmt wird.

9. Verfahren nach einem der vorstehenden Ansprüche, **dadurch gekennzeichnet, dass** in der Vollmantel-Schneckenzentrifuge (14) eine weitere Aufkonzentration des Käsebruchs unter Freisetzung von Molke erfolgt, wobei die freiwerdende Molke mittels eines Greifers unter Druck und der weiter aufkonzentrierte Käsebruch als Quarkkonzentrat mittels einer Schnecke über einen Feststoffaustrag (21) aus der Trommel der Vollmantel-Schneckenzentrifuge (14) ausgetragen wird.

10. Vorrichtung zur Durchführung des Verfahrens nach einem der vorstehenden Ansprüche, mit
a. einer als Düsenseparator oder Siebzentrifuge ausgebildeten ersten Trenneinrichtung, (1), mit der dickgelegte Milch in eine wässrige Phase und ein Feststoffkonzentrat, den Käsebruch, abtrennbar ist,
b. wobei der ersten Trenneinrichtung eine Vollmantel-Schneckenzentrifuge (14) nachgeschaltet ist.

11. Vorrichtung nach Anspruch 11, **dadurch gekennzeichnet, dass** der ersten Trenneinrichtung ein Zwischenbehälter (8) zum Zwischenlagern des aus dem Düsenseparator abgeleiteten Käsebruchs nachgeschaltet ist.

12. Vorrichtung nach Anspruch 10 oder 11, **dadurch gekennzeichnet, dass** dem Zwischenbehälter (8) eine Erhitzungseinrichtung (11) zum Erhitzen des Käsebruchs und der Erhitzungseinrichtung (11) eine Reaktionsstrecke (12) nachgeschaltet sind.

13. Vorrichtung nach Anspruch 12, **dadurch gekennzeichnet, dass** der Reaktionsstrecke (12) eine zweite Erhitzungseinrichtung (13) zum weiteren Erhitzen des Käsebruchs der Reaktionsstrecke nachgeschaltet ist.

14. Vorrichtung nach einem der vorstehenden Ansprüche 10 - 13, **dadurch gekennzeichnet, dass** die Vollmantel-Schneckenzentrifuge (14) eine Schälscheibe als Flüssigkeitsaustrag (20) aufweist.

## Claims

1. Process for producing a fresh cheese concentrate, in particular quark concentrate, in which
a. by means of a first separation unit constructed as a nozzle separator (1) or screen centrifuge, curdled milk is separated into an aqueous phase and a solids concentrate, the cheese curd,
b. the cheese curd which is passed out of the centrifuge (1) is passed into a solid bowl worm centrifuge (14) which is downstream of the first centrifuge and where further whey is separated off from the cheese curd and the cheese curd is further concentrated.

2. Process according to Claim 1, **characterized in that** the cheese curd is concentrated in the solid bowl worm centrifuge (14) to a dry matter content of less than 35%, in particular 30%.

3. Process according to one of the preceding Claims 1 or 2, **characterized in that,** in the first separation unit (1), a cheese curd having a dry matter content of 14% to 18% is produced.

4. Process according to Claim 1, 2 or 3, **characterized in that,** as an intermediate step between step a) and step b) of Claim 1, introduction and intermediate storage of the cheese curd which is passed out of the first separation unit (1) proceeds in an intermediate vessel (8).

5. Process according to one of the preceding claims, **characterized in that,** as an intermediate step between step a) and step b) of Claim 1, heating of the cheese curd to a temperature T1 is performed.

6. Process according to one of the preceding claims, **characterized in that** a further intermediate step between step a) and step b) of Claim 1, passing through a reaction path (12) downstream of the heating, is performed.

7. Process according to one of the preceding claims, **characterized in that,** as an intermediate step between step a) and step b) of Claim 1, further heating of the cheese curd to a second temperature T2 is performed.

8. Process according to one of the preceding claims, **characterized in that** the temperature T1 to which the cheese curd is heated during the first heating is lower than the temperature T2 to which the cheese curd is heated during the second heating.

9. Process according to one of the preceding claims, **characterized in that** further concentration of the cheese curd is performed in the solid bowl worm centrifuge (14) with release of whey, wherein the whey which is being released is discharged under pressure by means of a grab and the further concentrated cheese curd is discharged from the drum of the solid bowl worm centrifuge (14) as quark concentrate by means of a worm via a solids discharge (21).

10. Device for carrying out the process according to one of the preceding claims having
a. a first separation unit (1) which is constructed as a nozzle separator or screen centrifuge and by which the curdled milk can be separated into an aqueous phase and a solids concentrate, the cheese curd,
b. wherein a solid bowl worm centrifuge (14) is connected downstream of the first separation unit.

11. Device according to Claim 11, **characterized in that** an intermediate vessel (8) for the intermediate storage of the cheese curd passed out from the nozzle separator is connected downstream of the first separation unit.

12. Device according to Claim 10 or 11, **characterized in that** a heating appliance (11) for heating the cheese curd is connected downstream of the intermediate vessel (8) and a reaction path (12) is connected downstream of the heating appliance (11).

13. Device according to Claim 12, **characterized in that** a second heating appliance (13) is connected downstream of the reaction path (12) for further heating of the cheese curd of the reaction path.

14. Device according to one of the preceding Claims 10-13, **characterized in that** the solid bowl worm centrifuge (14) has a skimming disc as liquid discharge (20).

## Revendications

1. Procédé de fabrication d'un concentré de fromage frais, en particulier d'un concentré de fromage blanc, où,
a. au moyen d'un premier dispositif de séparation réalisé comme séparateur à buse (1) ou centrifugeuse à tamis, du lait coagulé est séparé en une phase aqueuse et un concentré solide, le caillé,
b. le caillé provenant de la centrifugeuse (1) est conduit vers une centrifugeuse à bol plein à vis sans fin (14) située en aval de la première centrifugeuse, où du petit-lait continue à être séparé du caillé et où le caillé continue à être concentré.

2. Procédé selon la revendication 1, **caractérisé en ce que** le caillé est concentré dans la centrifugeuse à bol plein à vis sans fin (14) jusqu'à un pourcentage de matière sèche inférieur à 35 %, en particulier inférieur à 30 %.

3. Procédé selon l'une des revendications 1 et 2, **caractérisé en ce qu'**un caillé avec un pourcentage de matière sèche compris entre 14 % et 18 % est produit dans le premier dispositif de séparation (1).

4. Procédé selon la revendication 1, 2 ou 3, **caractérisé en ce qu'**une introduction et un stockage provisoire du caillé provenant du premier dispositif de séparation (1) sont effectués dans un conteneur de stockage provisoire (8), en tant qu'étape intermédiaire entre l'étape a) et l'étape b) de la revendication 1.

5. Procédé selon l'une des revendications précédentes, **caractérisé en ce qu'**un chauffage du caillé à une température T1 est effectué en tant qu'étape intermédiaire entre l'étape a) et l'étape b) de la revendication 1.

6. Procédé selon l'une des revendications précédentes, **caractérisé en ce que** la traversée d'un parcours de réaction (12) est effectuée après chauffage en tant qu'autre étape intermédiaire entre l'étape a) et l'étape b) de la revendication 1.

7. Procédé selon l'une des revendications précédentes, **caractérisé en ce qu'**un autre chauffage du caillé est effectué à une deuxième température T2 en tant qu'étape intermédiaire entre l'étape a) et l'étape b) de la revendication 1.

8. Procédé selon l'une des revendications précédentes, **caractérisé en ce que** la température T1 à laquelle le caillé est porté lors du premier chauffage, est inférieure à la température T2 à laquelle le caillé est porté lors du deuxième chauffage.

9. Procédé selon l'une des revendications précédentes, **caractérisé en ce qu'**une autre concentration du caillé est réalisée dans la centrifugeuse à bol plein à vis sans fin (14) par extraction de petit-lait, le petit-lait extrait étant déversé par une sortie de matière solide (21) hors du tambour de la centrifugeuse à bol plein à vis sans fin (14) au moyen d'un préhenseur sous pression, et le caillé nouvellement concentré l'étant sous forme de fromage blanc concentré au moyen d'une vis sans fin.

10. Dispositif pour l'exécution du procédé selon l'une des revendications précédentes, avec
a. un premier dispositif de séparation réalisé comme séparateur à buse (1) ou centrifugeuse à tamis, permettant de séparer le lait coagulé en une phase aqueuse et un concentré solide, le caillé,
b. une centrifugeuse à bol plein à vis sans fin (14) étant située en aval de la première centrifugeuse.

11. Dispositif selon la revendication 10, **caractérisé en ce qu'**un conteneur de stockage provisoire (8) pour le stockage provisoire du caillé provenant du séparateur à buse est situé en aval du premier dispositif de séparation.

12. Dispositif selon la revendication 10 ou la revendication 11, **caractérisé en ce qu'**un dispositif de chauffage (11) pour le chauffage du caillé est situé en aval du conteneur de stockage provisoire (8), et un parcours de réaction (12) en aval du dispositif de chauffage (11).

13. Dispositif selon la revendication 12, **caractérisé en ce qu'**un deuxième dispositif de chauffage (13) pour un autre chauffage du caillé du parcours de réaction est situé en aval du parcours de réaction (12).

14. Procédé selon l'une des revendications 10 à 13, **caractérisé en ce que** la centrifugeuse à bol plein à vis sans fin (14) comporte un disque d'épluchage en tant que sortie de liquide (20).
